# EUROPEAN PATENT APPLICATION

(11) **EP 2 676 788 A1**
(43) Date of publication of application: **25.12.2013**
(21) Application number: 12747048.2
(22) Date of filing: 17.02.2012
(51) Int. Cl.: B29C 73/10, B60C 19/00

(54) **RUBBER PATCH FOR REPAIRING RADIAL TIRES, METHOD FOR REPAIRING RADIAL TIRES USING SAME, AND REPAIRED RADIAL TIRE**

(30) Priority: 17.02.2011 JP 2011032304; 17.02.2011 JP 2011032322
(71) Applicant: Bridgestone Corporation, Tokyo 104-8340 (JP)
(72) Inventor: SHOUYAMA, Yoshinobu, Kodaira-shi, Tokyo 187-8531 (JP)
(74) Representative: Lamb, Martin John Carstairs
(86) International application number: PCT/JP2012/001079
(87) International publication number: WO 2012/111347

(57) **Abstract**

An object of the present invention is to provide: a patch rubber for repairing a radial tire, which patch rubber is capable of preventing troubles from occurring at an early stage in a repaired radial tire to enhance durability of the repaired radial tire; a method for repairing a radial tire by using the patch rubber; and a radial tire repaired by the patch rubber. Specifically, a patch rubber for repairing a radial tire, the patch rubber being constituted of reinforcing cord layers each formed by coating plural reinforcing cords aligned in parallel to each other with rubber, is **characterized in that:** the reinforcing cord layers constitute a laminate in which they are laminated from one side to the other side; and provided that: i) a region defined by a contour curve connecting adjacent cord ends of the plural reinforcing cords at one end side thereof, another contour curve connecting adjacent cord ends of the plural reinforcing cords at the other end side thereof, and the outermost reinforcing cords in a cord-juxtaposing direction of the plural reinforcing cords represents a reinforcing region in each reinforcing cord layer; ii) one reinforcing cord layer has one reinforcing region; and iii) another reinforcing cord layer, which includes the reinforcing cords having the same cord-extending direction as the reinforcing cords of the one reinforcing cord layer and is laminated on the other side in the layer-lamination direction of the one reinforcing cord layer, has another reinforcing region, the another reinforcing region resides within the one reinforcing region.

## Description

### TECHNICAL FIELD

The present invention relates to a patch rubber for repairing a radial tire, a method for repairing a radial tire by using the patch rubber, and a radial tire repaired by the patch rubber. In particular, the present invention relates to a patch rubber for repairing a radial tire, which patch rubber is put, when a radial carcass ply and a belt ply are damaged in a tread portion of the radial tire, on these damaged portions inside the tire for reinforcing the damaged portions, a method for repairing a radial tire by using the patch rubber, and a radial tire repaired by the patch rubber.

### BACKGROUND ART

A tread portion of a radial tire, in particular, a super large-size radial tire such as a tire for a construction vehicle is sometimes damaged by penetration of a bolt, a sharply cracked stone, or the like therethrough, so that both a carcass ply as rubber-coated carcass ply cords and a belt ply as rubber-coated belt cords disposed on the tire radially outer side of the carcass ply break.

There has been proposed as a method for repairing a radial tire of which tread portion has been damaged as described above a method for repairing a damaged radial tire by attaching a patch rubber, constituted of a reinforcing cord layer formed by coating plural reinforcing cords aligned in parallel to each other with rubber, on a damaged portion of a tread portion, i.e. a broken carcass ply cord and a broken belt cord, inside the tire by using an adhesive so that the damaged portion is reinforced by the path rubber (e.g. Patent Literature 1).

The conventional method for repairing a damaged radial tire described above also employs a patch rubber constituted as a laminate of plural reinforcing cord layers in terms of reliably obtaining a reinforcing effect.

### CITATION LIST

### Patent Literature

PTL 1: JP-A 07-172123

### SUMMARY OF THE INVENTION

### Technical Problems

In the case of the conventional patch rubber for repairing a damaged radial tire described above, however, respective end positions of reinforcing cords are aligned in the layer-lamination direction in the plural reinforcing cord layers, whereby respective end faces, relatively weakly adhered to rubber, of the reinforcing cords are positioned with relatively short interval therebetween in the layer-lamination direction. As a result, in a radial tire of which damaged portions have been repaired by using the aforementioned conventional patch rubber for repair, cracks generated between end faces, relatively weakly adhered to rubber, of the reinforcing cords and rubber surrounding the end faces easily spread across the end faces of the reinforcing cords adjacent to each other with relatively short intervals therebetween, possibly causing troubles at an early stage in the repaired radial tire.

In view of the situation described above, an object of the present invention is to provide a patch rubber for repairing a radial tire, which patch rubber is capable of preventing troubles from occurring at an early stage in a repaired radial tire to enhance durability of the repaired radial tire. Further, another object of the present invention is to provide a method for repairing a radial tire by using the patch rubber, and a radial tire repaired by the patch rubber.

### Solution to the Problems

The present invention, aiming at advantageously solving the problems described above, provides in a first aspect thereof a patch rubber for repairing a radial tire, the patch rubber being constituted of reinforcing cord layers each formed by coating plural reinforcing cords aligned in parallel to each other with rubber, **characterized in** that: the reinforcing cord layers constitute a laminate in which they are laminated from one side to the other side; and provided that: i) a region defined by a contour curve connecting adjacent cord ends of the plural reinforcing cords at one end side thereof, another contour curve connecting adjacent cord ends of the plural reinforcing cords at the other end side thereof, and the outermost reinforcing cords in a cord-juxtaposing direction of the plural reinforcing cords represents a reinforcing region in each reinforcing cord layer; ii) one reinforcing cord layer has one reinforcing region; and iii) another reinforcing cord layer, which includes the reinforcing cords having the same cord-extending direction as the reinforcing cords of the one reinforcing cord layer and is laminated on the other side in the layer-lamination direction of the one reinforcing cord layer, has another reinforcing region, the another reinforcing region resides within the one reinforcing region.
It is possible to prevent end faces, relatively weakly adhered to rubber, of the reinforcing cords of the one reinforcing cord layer from being positioned at relatively short interval in the layer-lamination direction with respect to the corresponding end faces of the reinforcing cords extending in the same direction as the reinforcing cords of the one reinforcing cord layer, of another reinforcing cord layer poisoned in the other side in the layer-lamination direction, by designing the one reinforcing region of the one reinforcing cord layer to reside within the another reinforcing region of the another reinforcing cord layer as described above. As a result, cracks generated between the end faces of the reinforcing cords and rubber surrounding the end faces are prevented from spreading across the end faces of the reinforcing cords adjacent to each other in the layer-lamination direction, thereby successfully enhancing durability of the radial tire repaired by using the patch rubber.
The "plural reinforcing cords aligned in parallel to each other" do not represent reinforcing cords aligned strictly in parallel to each other in mathematical terms but reinforcing cords simply extending in the same direction in the present invention. Further, "the cord-juxtaposing direction" represents a direction orthogonal to the cord extending direction in the present invention.

In a second aspect of the present invention, it is preferable that the patch rubber for repairing a radial tire is further **characterized in that:** the cord-extending direction of the reinforcing cords of at least one of the reinforcing cord layers is orthogonal to the cord-extending direction of the reinforcing cords of the rest of the reinforcing cord layers; width in the cord-juxtaposing direction of the at least one of the reinforcing cord layers is narrower than length in the cord-extending direction of the outermost reinforcing cords in the cord-juxtaposing direction of the rest of the reinforcing cord layers; and width in the cord-juxtaposing direction of the rest of the reinforcing cord layers is narrower than length in the cord-extending direction of the outermost reinforcing cords in the cord-juxtaposing direction of the at least one of the reinforcing cord layers.
A reinforcing effect of the patch rubber caused by a hooping effect thereof of suppressing popping-out of damaged portions due to internal pressure and rotation of the tire is enhanced and durability of the radial tire repaired by the patch rubber is further improved by designing the patch rubber such that the cord-extending direction of the reinforcing cords of at least one of the reinforcing cord layers is orthogonal to the cord-extending direction of the reinforcing cords of the rest of the reinforcing cord layers as described above.
A "width in the cord-juxtaposing direction" represents a distance in the cord-juxtaposing direction between the two reinforcing cords disposed on outermost edges in the cord-juxtaposing direction.

Further, in a third aspect of the present invention, it is preferable that the patch rubber for repairing a radial tire is further **characterized in that** tensile modulus of elasticity of the reinforcing cords of the at least one of the reinforcing cord layers is higher than tensile modulus of elasticity of the reinforcing cords of the rest of the reinforcing cord layers.

Yet further, in a fourth aspect of the present invention, it is preferable that the patch rubber for repairing a radial tire is further **characterized in that** the at least one of the reinforcing cord layers is disposed on the outermost side in the layer-lamination direction in the laminate.

Yet further, in a fifth aspect of the present invention, it is preferable that the patch rubber for repairing a radial tire is further **characterized in that** the reinforcing cords of the at least one of the reinforcing cord layers are aramid cords or glass fiber cords.

Yet further, in a sixth aspect of the present invention, it is preferable that the patch rubber for repairing a radial tire is further **characterized in that** the at least one of the reinforcing cord layers is thicker than each of the rest of the reinforcing cord layers.

Yet further, in a seventh aspect of the present invention, it is preferable that the patch rubber for repairing a radial tire is further **characterized in that:** the plural reinforcing cords are constituted of: a long reinforcing cord having the longest length in the cord-extending direction among the reinforcing cords; and at least a pair of reinforcing cord disposed on respective sides in the cord-juxtaposing direction orthogonal to the cord-extending direction, of the long reinforcing cord; and cord ends of the reinforcing cord disposed the closer to the long reinforcing cord are positioned on the more outer side in the cord-extending direction, in said at least a pair of reinforcing cords disposed on respective sides in the cord-juxtaposing direction of the long reinforcing cord.

In an eighth aspect of the present invention, a method for repairing a radial tire having a tread portion, a pair of sidewall portions extending on the tire radially inner side from respective sides of the tread portion, a pair of bead portions extending on the tire radially inner side from the respective sidewalls, a radial carcass ply including at least one ply formed by plural ply cords coated with ply rubber and extending in a toroidal shape across the bead portions, and a belt ply including at least one ply formed by plural belt cords coated with belt rubber, comprises the steps of: attaching, when at least one of the ply cords of the radial carcass ply and the belt cords of the belt ply are broken in at least one of the sidewall portions and the tread portion, a patch rubber for radial tire repair on at least one of a damaged portion of the broken ply cords of the radial carcass ply and a damaged portion of the broken belt cords of the belt ply from at least one of the inner side and the outer side of the tire, for reinforcing the damaged portion; and using the patch rubber for repairing a radial tire of any of the first to seventh aspects of the present invention and attaching it on the damaged portion of the radial tire in the aforementioned reinforcing step.
Durability of a radial tire repaired by a patch rubber can be significantly enhanced by repairing the radial tire by using the patch rubber structured as described above.

Yet further, in a ninth aspect of the present invention, it is preferable that the method for repairing a radial tire is further **characterized in that** the reinforcing step comprising: attaching, when the ply cords of the radial carcass ply are broken in the sidewall portion, the patch rubber on the damaged portion of the broken ply cords of the radial carcass ply such that the reinforcing cords of all of the reinforcing cord layers constituting the patch rubber are inclined at an angle in the range of 0° to 30° with respect to the cord-extending direction of the ply cords of the radial carcass ply.
The reinforcing effect caused by the patch rubber on the damaged portion of the broken carcass ply improves by attaching the patch rubber as described above.

Yet further, in a tenth aspect of the present invention, it is preferable that the method for repairing a radial tire is further **characterized in that** the reinforcing step comprising: attaching, when the belt cords of the belt ply are broken in the tread portion, the patch rubber on the damaged portion of the broken belt cords of the belt ply such that the reinforcing cords of at least one of the plural reinforcing cord layers constituting the patch rubber are inclined at an angle in the range of 0° to 30° with respect to the tire circumferential direction and the reinforcing cords of the rest of the plural reinforcing cord layers are inclined at an angle in the range of 0° to 30° with respect to the cord-extending direction of the ply cords of the radial carcass ply.
The reinforcing effect caused by the patch rubber on the damaged portion(s) of at least one of the broken carcass ply and the broken belt ply improves by attaching the patch rubber as described above.
An angle formed between the reinforcing cords of the patch rubber and the carcass ply cords and an angle formed between the reinforcing cords of the patch rubber and the tire circumferential direction represent smaller angles formed by the reinforcing cords with respect to the two relevant directions, respectively.

Yet further, in an eleventh aspect of the present invention, it is preferable that the method for repairing a radial tire further comprises setting dimension of a working area of the patch rubber to be put on a damaged portion of the radial tire from the inner side of the tire, to be 2 to 4 times as large as the damaged portion.
A radial tire can be repaired with smaller amount of rubber and in shorter time necessitated for repair, with ensuring a satisfactory reinforcing effect on a damaged portion, by setting dimension of a working area of the patch rubber provided on the inner side of the tire to be 2 to 4 times as large as the damaged portion.

Yet further, in a twelfth aspect of the present invention, it is preferable that the method for repairing a radial tire further comprises setting dimension of a working area of the patch rubber to be put on a damaged portion of the radial tire from the outer side of the tire, to be 1.1 to 1.4 times as large as the damaged portion.
A radial tire can be repaired with smaller amount of rubber and in shorter time necessitated for repair, with ensuring a satisfactory reinforcing effect on a damaged portion, by setting dimension of a working area of the patch rubber provided on the outer side of the tire to be 1.1 to 1.4 times as large as the damaged portion.

Yet further, in a thirteenth aspect of the present invention, it is preferable that the method for repairing a radial tire is further **characterized in that** the rubber constituting the patch rubber for repairing a radial tire is unvulcanized rubber and the patch rubber is vulcanized after completion of the aforementioned reinforcing step. Forming the patch rubber by using unvulcanized rubber is advantageous because: the patch rubber can be put on a surface of a damaged portion with satisfactory adhesion therebetween, whereby air bubbles are less likely to remain around the damaged portion; and the patch rubber can be prevented from being excessively vulcanized when the damaged portion with the patch rubber put thereon is vulcanized.

Yet further, in a fourteenth aspect of the present invention, a repaired radial tire is **characterized in that** the radial tire has been repaired according to the aforementioned method for repairing a radial tire. A repaired radial tire which exhibits good durability and can be used for a long period is obtained by repairing a damaged radial tire by the method for repairing a radial tire of the present invention. Advantageous Effect of the Invention

The patch rubber for repairing a radial tire of the present invention significantly enhances durability of a radial tire repaired by using the same. Further, durability of a radial tire repaired by using the patch rubber is significantly improved by the method for repairing a radial tire of the present invention. Yet further, the repaired radial tire according to the present invention is a repaired radial tire which exhibits good durability and can be used for a long period.

### BRIEF DESCRIPTION OF THE DRAWINGS

FIG. 1A is a sectional view in the tire widthwise direction of a half portion of a repaired radial tire, of which tread portion has been repaired by a representative method for repairing a radial tire of the present invention.
FIG. 1B is a sectional view in the tire widthwise direction of a half portion of the radial tire same but prior to the repair as the radial tire of FIG. 1A.
FIG. 2 is a perspective view of a representative patch rubber for repairing a radial tire of the present invention.
FIG. 3 is a plan view of one of reinforcing cord layers constituting the patch rubber for repairing a radial tire shown in FIG. 2.
FIG. 4A is a plan view of the patch rubber for repairing a radial tire shown in FIG. 2.
FIG. 4B is a sectional view of the patch rubber for repairing a radial tire, cut along line I-I of FIG. 4A.
FIG. 5 is an enlarged view of positions of the reinforcing cord ends shown in FIG. 3
FIGS. 6A to 6D are explanatory views of a repairing process according to a representative method for repairing a radial tire of the present invention.
FIG. 7A is an explanatory view showing a state where the patch rubber for repairing a radial tire shown in FIG. 2 has been put on a damaged portion generated in a tread portion of a radial tire.
FIG. 7B is an explanatory view showing how reinforcing cords of the patch rubber of

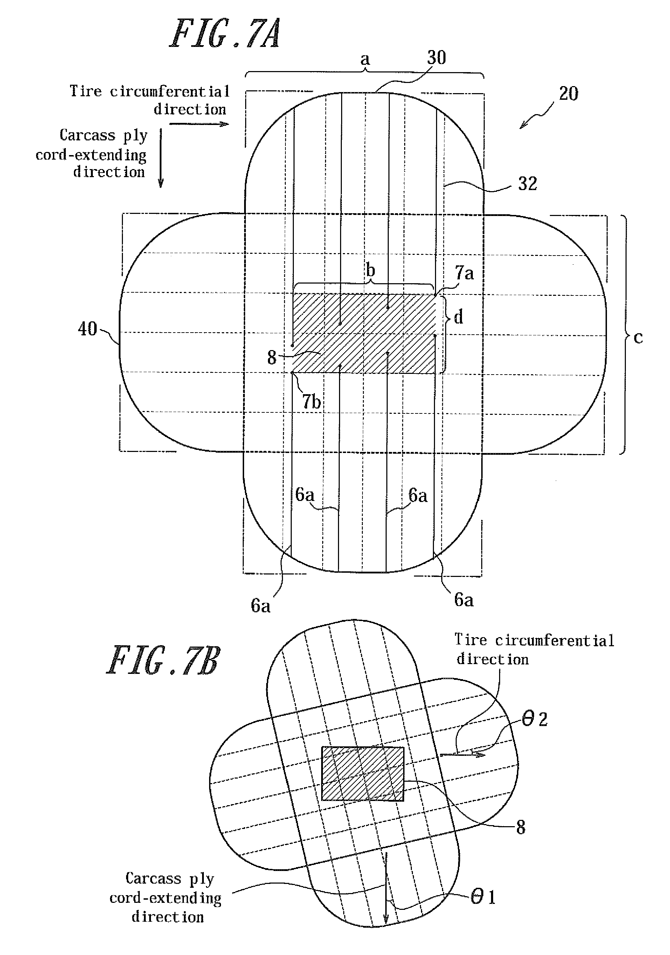

FIG. 7A intersect the cord-extending direction of ply cords of a radial carcass ply and the tire circumferential direction, respectively, in the radial tire.

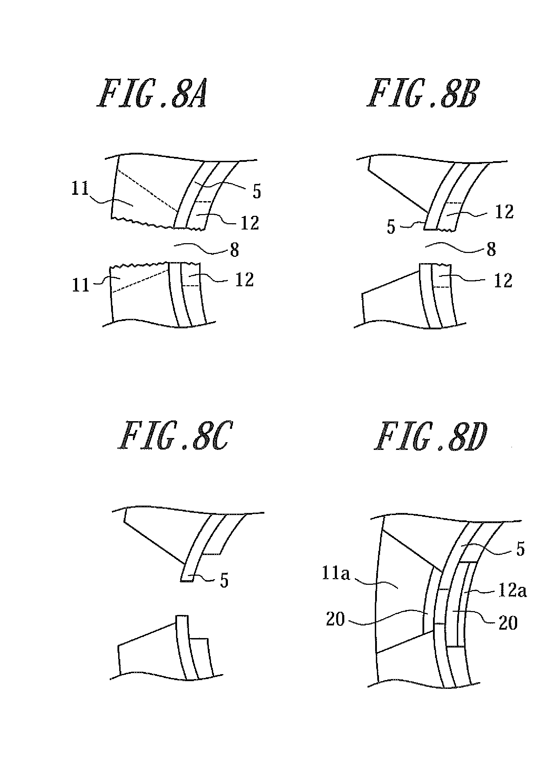

FIGS. 8A to 8D are explanatory views of a repairing process according to a representative method for repairing a radial tire of the present invention.

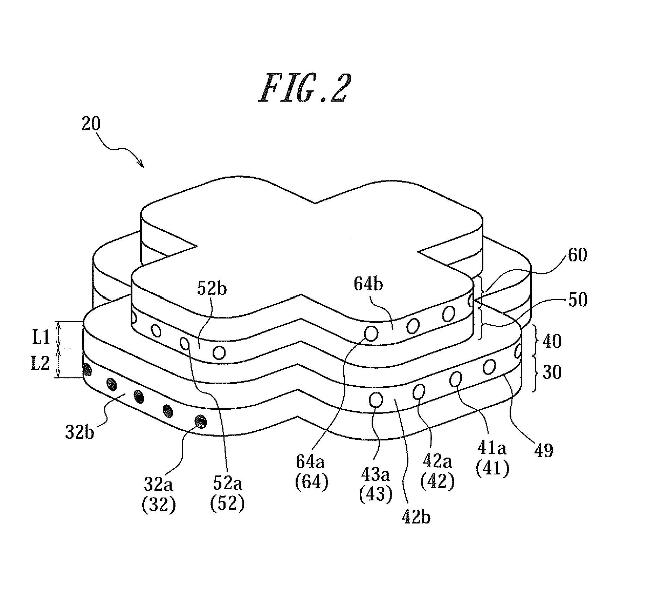

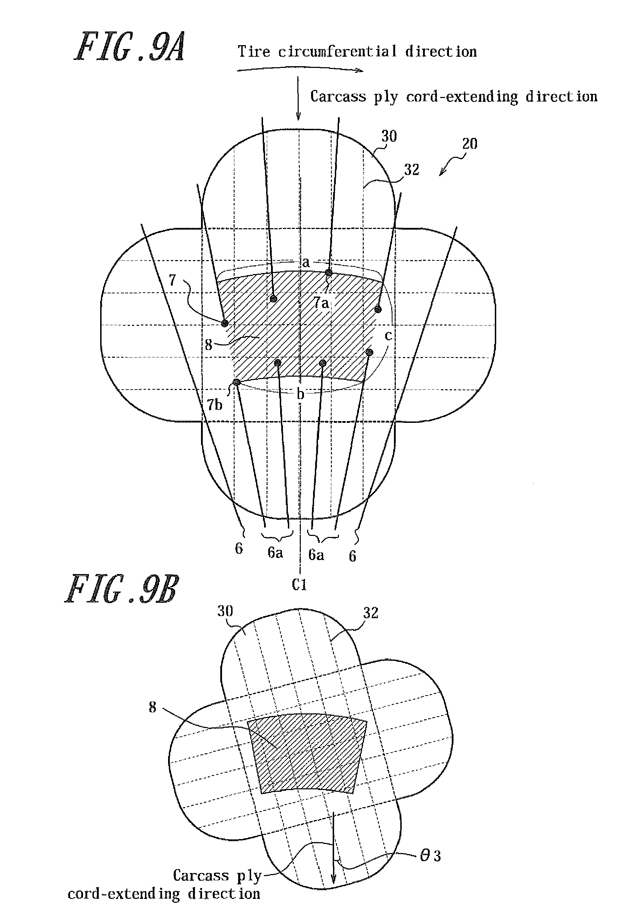

FIG. 9A is an explanatory view showing a state where the patch rubber for repairing a radial tire shown in FIG. 2 has been put on a damaged portion generated in a sidewall portion of a radial tire.
FIG. 9B is an explanatory view showing how reinforcing cords of the patch rubber of
FIG. 9A intersect the cord-extending direction of ply cords of a radial carcass ply and the tire circumferential direction, respectively, in the radial tire.

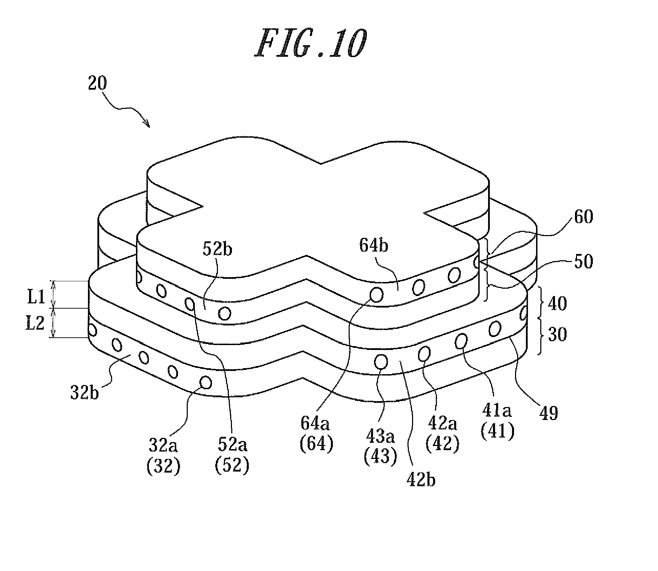

FIG. 10 is a perspective view of a patch rubber for repairing a radial tire employed in Example 1 of the present invention.

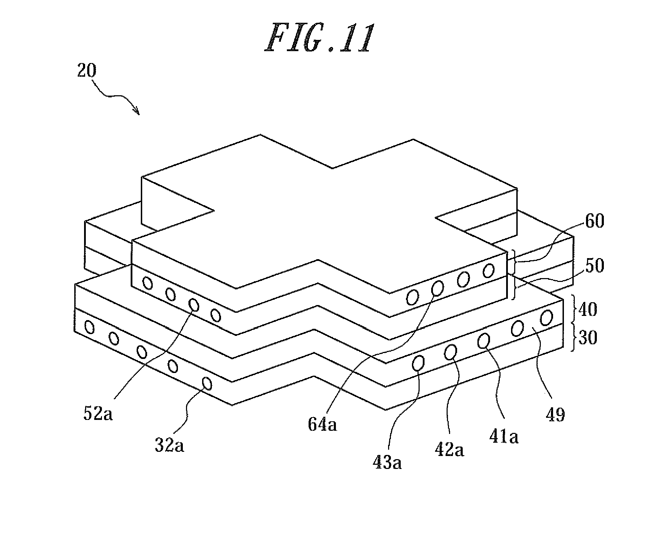

FIG. 11 is a perspective view, showing cross sections of the reinforcing cords, of a patch rubber for repairing a radial tire employed in Example 2 of the present invention.

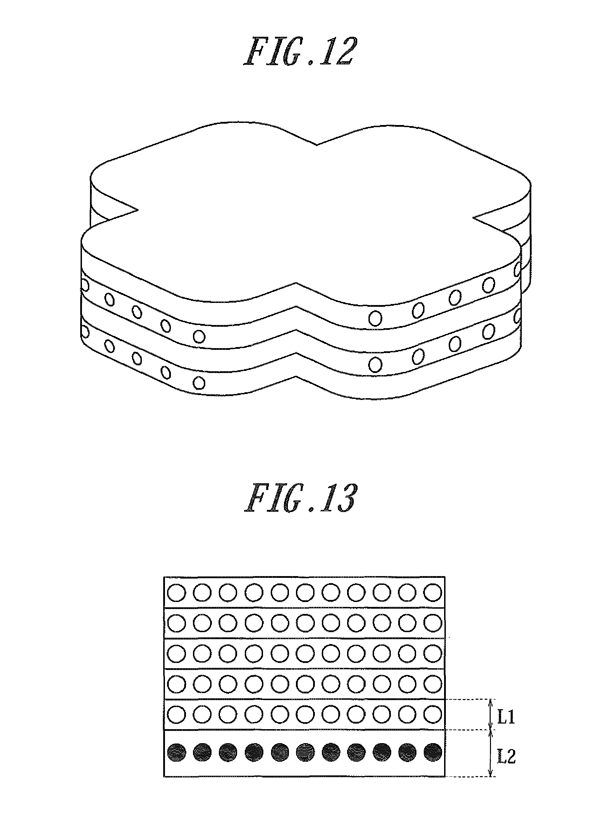

FIG. 12 is a perspective view, showing cross sections of the reinforcing cords, of a patch rubber for repairing a radial tire employed in Comparative Examples of the present invention.
FIG. 13 is a perspective view, showing cross sections of the reinforcing cords, of a patch rubber for repairing a radial tire employed in Reference Examples of the present invention.

### DESCRIPTION OF THE EMBODIMENTS

### (Radial tire)

An embodiment of the present invention will be described in detail with reference to the drawings hereinafter.

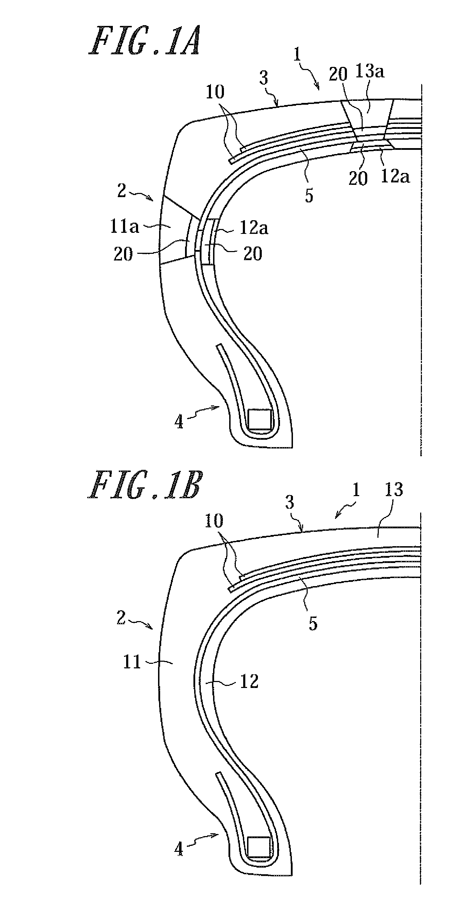

FIG. 1B shows a sectional view in the tire widthwise direction of a half portion of a radial tire prior to repair (precisely, prior to being damaged), which is to be repaired by one example of the method for repairing a radial tire of the present invention. The radial tire 1 shown in FIG. 1B has: a tread portion 3 (only a section thereof corresponding to a half portion of the radial tire is shown); a pair of sidewall portions 2 extending on the tire radially inner side from respective sides of the tread portion 3 (only one sidewall portion is shown); a pair of bead portions 4 extending on the tire radially inner side from the respective sidewalls 2 (only one bead portion is shown); a radial carcass ply 5 including at least one ply (FIG. 1B shows a case where the radial carcass ply includes one ply) and extending in a toroidal shape across the bead portions 4; and a belt ply 10 including at least one ply (FIG. 1B shows a case where the belt ply includes two plies) and disposed on the tire radially outer side of the radial carcass ply 5.

The radial carcass ply 5 is a rubber-coated cord layers constituted of plural carcass ply cords which are disposed to be inclined at a predetermined angle (e.g. 80° to 90°) with respect to the tire circumferential direction and coated with carcass rubber. The belt ply 10 includes rubber-coated cord layers each constituted of plural belt cords which are disposed to be inclined at a predetermined angle (e.g. 0° to 40°) with respect to the tire circumferential direction and coated with belt rubber. It should be noted that the predetermined angles formed by the carcass ply cords and the belt cords with respect to the tire circumferential direction are not restricted to the aforementioned ranges, respectively.

In one example of the method for repairing a radial tire of the present invention, when the radial tire 1 was damaged by penetration of a stone, a large projection or the like therethrough and the ply cords of the radial carcass ply 5, as well as the ply rubber, broke in the sidewall portion 2 or the tread portion 3, patch rubbers are attached on damaged portions for mending as shown in FIG. 1A (FIG. 1A shows a case where the ply cords broke or were fractured in both the sidewall portion 2 and the tread portion 3).

### (Patch rubber)

A patch rubber 20 as an example of the patch rubber of the present invention has a sheet-like shape and is to be attached on the damaged portion of the tread portion 3 of the radial tire 1 from the inner side and the outer side of the tire, respectively, so that the patch rubbers 20 thus applied entirely cover the damaged portion.

Specifically, as shown in FIG. 2, the patch rubber 20 is constituted of plural reinforcing cord layers (four layers 30, 40, 50, 60 in FIG. 2) laminated from one side to the other side in the layer-lamination direction (the layer 30 side represents "one side" and the layer 60 side represents "the other side" in FIG. 2). Each of the reinforcing cord layers thus laminated is formed by plural reinforcing cords disposed in parallel to each other and coated with rubber.

A material of the rubber for coating the reinforcing cords with is preferably the same as the rubber material constituting a damaged portion of the radial tire, on which the patch rubber 20 is to be put.

The cord-extending directions of reinforcing cords 32, 42, 52, 64 of the reinforcing cord layers 30, 40, 50, 60 are alternately changed in FIG. 2. However, it is acceptable that the reinforcing cords of the reinforcing cord layers unanimously share the same cord-extending direction in the present invention.

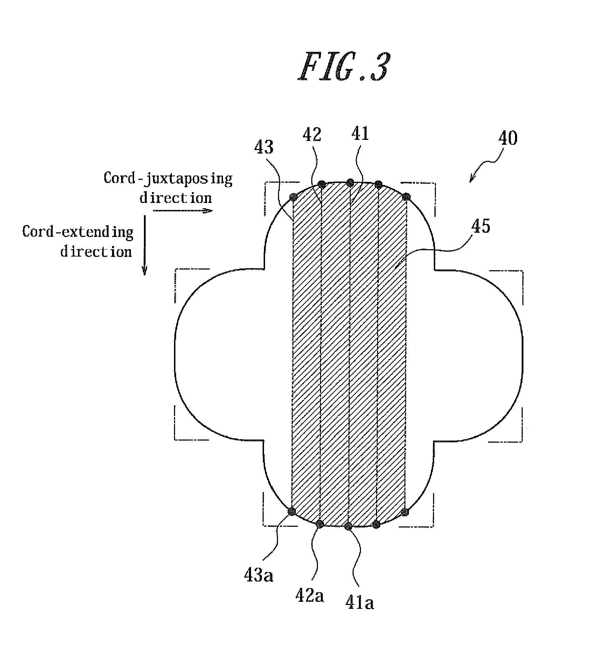

FIG. 3 is a plan view of one reinforcing cord layer 40 extracted from the reinforcing cord layers constituting the patch rubber 20 shown in FIG. 2. The reinforcing cord layer 40 is formed by coating plural reinforcing cords 41, 42, 43 disposed in parallel to each other with rubber. In the reinforcing cord layer 40, a region defined by a contour curve connecting adjacent cord ends 41 a, 42a, 43 a of the plural reinforcing cords 41, 42, 43 at one end side thereof, another contour curve connecting adjacent cord ends 41a, 42a, 43a of the plural reinforcing cords 41, 42, 43 at the other end side thereof, and the outermost reinforcing cords 43, 43 in a cord-juxtaposing direction of the plural reinforcing cords 41, 42, 43, i.e. a hatched region 45 in FIG. 3, represents a "reinforcing region" of the reinforcing cord layer 40. A reinforcing region is defined similarly in other reinforcing cord layers 30, 50, 60 of the patch rubber 20.

In the patch rubber 20 as an example of the patch rubber of the present invention, when one reinforcing cord layer 40 has one reinforcing region 45 and another reinforcing cord layer 60, which shares the same cord-extending direction of the reinforcing cords as that of the one reinforcing cord layer 40 and is laminated on the other side in the layer-lamination direction of the one reinforcing cord layer 40, has another reinforcing region 65, the another reinforcing region 65 resides within the one reinforcing region 45. Similarly, when one reinforcing cord layer 30 has one reinforcing region 35 and another reinforcing cord layer 50, which shares the same cord-extending direction of the reinforcing cords as that of the one reinforcing cord layer 30 and is laminated on the other side in the layer-lamination direction of the one reinforcing cord layer 30, has another reinforcing region 55, the another reinforcing region 55 resides within the one reinforcing region 35.

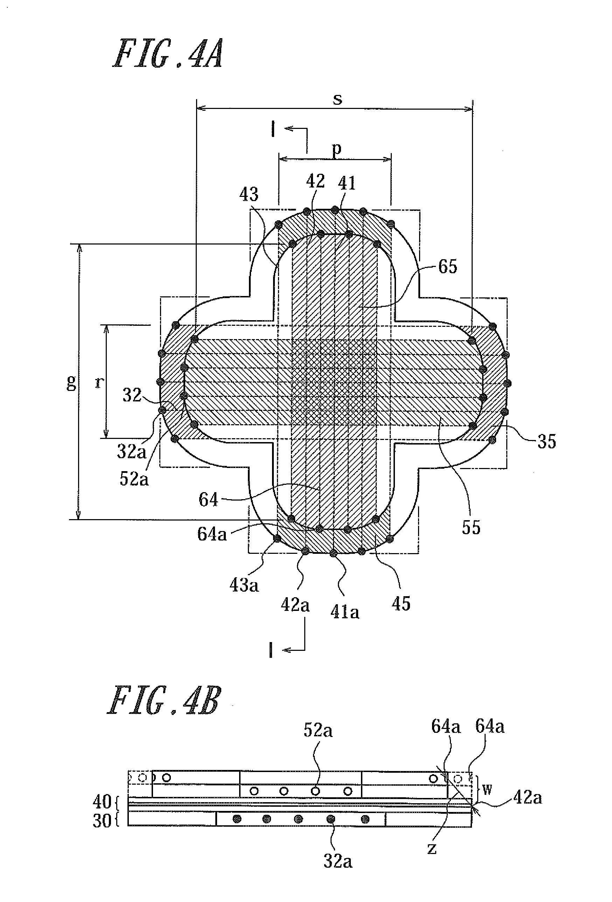

FIG. 4B is a sectional view, cut along line I-I of FIG. 4A, of the patch rubber shown in FIG. 4A. Provided that: distance between a cord end position 42a of the reinforcing cord 42 of the reinforcing cord layer 40 and a cord end position 64a of a reinforcing cord 64, corresponding to the reinforcing cord 42 in terms of position, of the reinforcing cord layer 60 (the reinforcing cord layer 60 is laminated on the other side in the layer-lamination direction of the reinforcing cord layer 40 and the reinforcing region 65 thereof resides within the reinforcing region 45 of the reinforcing cord layer 40 as described above) is z; and distance between the cord end position 42a and a cord end position 64a' of a reinforcing cord 64' of a reinforcing cord layer 60' of a conventional patch rubber as shown in FIG. 12, in which layer 60' cord end positions of reinforcing cords are aligned on straight lines in the cord-juxtaposing direction and the layer-lamination direction, respectively, is w (the cord end position 64a' is indicated by phantom lines in FIG. 4B), z > w.

Accordingly, it is possible to avoid positioning respective end faces (42a, 64a), relatively weakly adhered to rubber, of the reinforcing cords with relatively short interval therebetween w in the layer-lamination direction in the reinforcing cord layers 40, 60 having the same cord-extending direction of the reinforcing cords. As a result, cracks generated between the end faces of the reinforcing cords and rubber surrounding the end faces are prevented from spreading across the end faces of the reinforcing cords adjacent to each other in the layer-lamination direction, thereby successfully enhancing durability of the radial tire repaired by using the patch rubber.

In the patch rubber 20 constituted of a laminate of plural reinforcing cord layers (30, 40, 50, 60) as one example of the patch rubber of the present invention, the reinforcing cord layers 30, 50 share the same cord-extending direction of the reinforcing cords thereof and the reinforcing cord layers 40, 60 share the same cord-extending direction of the reinforcing cords thereof, as shown in FIG. 2. Further, the cord-extending direction of the reinforcing cord layers 30, 50 is orthogonal to the cord-extending direction of the reinforcing cord layers 40, 60 in a plan view. Specifically, as shown in FIG. 4A, the reinforcing cords 42 of the reinforcing cord layer 40 are orthogonal to the reinforcing cords 32 of the reinforcing cord layer 30 adjacent to the reinforcing cord layer 40 on the one side in the layer-lamination direction thereof and the reinforcing cords 52 of the reinforcing cord layer 50 adjacent to the reinforcing cord layer 40 on the other side in the layer-lamination direction thereof.
In the patch rubber 20 of the present invention as a laminate of plural reinforcing cord layers, the number of the reinforcing cord layers is not particularly limited and it suffices that reinforcing cords of at least one reinforcing cord layer are orthogonal to reinforcing cords of the rest of the reinforcing cord layers when the cord-extending directions of these reinforcing cords are to be orthogonal to each other.

Further, when the cord-extending direction of the reinforcing cords of at least one of the reinforcing cord layers (e.g. the reinforcing cord layers 40, 60) is orthogonal to the cord-extending direction of the reinforcing cords of the rest of the reinforcing cord layers (e.g. the reinforcing cord layers 30, 50), width p in the cord-juxtaposing direction of the at least one of the reinforcing cord layers (e.g. the reinforcing cord layer 40) is narrower than length s in the cord-extending direction of the outermost reinforcing cords in the cord-juxtaposing direction of the rest of the reinforcing cord layers (e.g. the reinforcing cord layer 50); and width r in the cord-juxtaposing direction of the rest of the reinforcing cord layers (e.g. the reinforcing cord layer 30) is narrower than length g in the cord-extending direction of the outermost reinforcing cords in the cord-juxtaposing direction of the at least one of the reinforcing cord layers (e.g. the reinforcing cord layer 60). In short, the patch rubber has a cross-like configuration in plan view in this case.

A reinforcing effect of the patch rubber caused by a hooping effect thereof of suppressing popping-out of damaged portions due to internal pressure and rotation of the tire is enhanced and durability of the radial tire repaired by the patch rubber is further improved by designing the patch rubber such that the cord-extending direction of the reinforcing cords of at least one of the reinforcing cord layers is orthogonal to the cord-extending direction of the reinforcing cords of the rest of the reinforcing cord layers as described above.

In the patch rubber 20 for repairing a radial tire as a laminate of the reinforcing cord layers 30, 40, 50, 60, tensile modulus of elasticity of the reinforcing cords 32 of the outermost reinforcing cord layer 30 on the one side in the layer-lamination direction (i.e. the lowest reinforcing cord layer in FIG. 2) is higher than tensile modulus of elasticity of the reinforcing cords 41, 52, 64 of the rest of the reinforcing cord layers 40, 50, 60.

When a force is applied to a damaged portion of a radial tire repaired by a patch rubber, a reinforcing cord layer remote from the damaged portion generally exhibits larger elongation than a reinforcing cord layer close to the damaged portion within the same one patch rubber. In the case of the patch rubber 20 as shown in FIG. 2, however, it is possible to attach the patch rubber 20 on a damaged portion such that the reinforcing cord layer 30 using the reinforcing cords 32 having high tensile modulus of elasticity thereof, i.e. as the lowest layer in FIG. 2, is directly in contact with the damaged portion. That is, it is possible to increase, by using the reinforcing cords 32 having high tensile modulus of elasticity, resistance force generated when the reinforcing cord layer 30 is stretched and increase, by using the reinforcing cords 52 having the same cord-extending direction as but lower tensile modulus of elasticity than the reinforcing cords 32, a magnitude of elongation of the reinforcing cord layer 50, so that durability of the radial tire repaired by the patch rubber is improved.

The reinforcing cord layer using the reinforcing cords having high tensile modulus of elasticity does not need to be the outermost reinforcing cord layer in the patch rubber of the present invention. Specifically, the aforementioned reinforcing effect can be obtained and durability of the radial tire repaired by the patch rubber is improved in the example shown in FIG. 2 as long as the reinforcing cord layer 30 using the reinforcing cords 32 having high tensile modulus of elasticity is disposed closer to a damaged portion than the reinforcing cord layer 50 using the reinforcing cords 52 having low tensile modulus of elasticity is.

Type of a material of the reinforcing cords 3 2, 42, 5 2, 64 is not restricted as long as the resulting reinforcing cords can reinforce a damaged portion in a satisfactory manner. Examples of the reinforcing cords include in terms of cord configuration twisted cords, single filament, and plural aligned filaments. Diameter of each of the reinforcing cords 32, 42, 52, 64 is preferably smaller than diameter of each ply cord of the damaged radial carcass ply and the reinforcing cords 32, 42, 52, 64 is preferably made of a material different from a material of the ply cords of the radial carcass ply because tensile force exerted on the reinforcing cords 3 2, 42, 52, 64 increases to possibly facilitate occurrence of separation at end portions of the reinforcing cords 32, 42, 52, 64 in the patch rubber when the reinforcing cords 32, 42, 52, 64 are made of the same material and/or each have the same diameter as the ply cords of the radial carcass ply.

Examples of the reinforcing cord 32 having high tensile modulus of elasticity for use in the reinforcing cord layer 30 include aramid cords and glass fiber cords. Examples of the reinforcing cord 42 having low tensile modulus of elasticity for use in the reinforcing cord layer 40 include nylon cords and rayon cords.

The reinforcing cord 32 having high tensile modulus of elasticity preferably has tensile modulus of elasticity in the range of 50 GPa to 70 GPa. The reinforcing cord 42 having low tensile modulus of elasticity preferably has tensile modulus of elasticity in the range of 3.0 GPa to 7.0 GPa. "Tensile modulus of elasticity" represents the average tensile modulus of elasticity at elongation of X/3 to 2X/3 when fracture elongation is X% at the room temperature (20°C) in the present invention.

Increase in tensile modulus of elasticity of reinforcing cords results in higher rigidity of the reinforcing cords in a patch rubber for repairing a radial tire. The reinforcing cord layer 30 therefore experiences relatively large strain when a force is exerted on a damaged portion of a radial tire repaired by the patch rubber 20. In view of this, it is preferable in the patch rubber 20 of the present invention to set thickness L2 of the reinforcing cord layer 30 using the reinforcing cords having high tensile modulus of elasticity to be larger than thickness of L1 of the reinforcing cord layer 40 using the reinforcing cords having low tensile modulus of elasticity. As a result, strains generated in the reinforcing cord layer 30 is alleviated to successfully enhance durability of the repaired radial tire 1.

The plural reinforcing cords 41, 42, 43 in the same one reinforcing cord layer include: a long reinforcing cord 41 having the longest length in the cord-extending direction among the reinforcing cords 41, 42, 43; and at least a pair of reinforcing cords 42, 43 disposed on respective sides in the cord-juxtaposing direction orthogonal to the cord-extending direction, of the long reinforcing cord 41 in the patch rubber for repairing a radial tire of the present invention, as shown in FIG. 3. Further, cord ends 42a of the reinforcing cords 42, disposed closer to the long reinforcing cord 41 than cord ends 43a of the reinforcing cords 43 are, are positioned on the more outer side in the cord-extending direction than the cord ends 43 are. In short, the reinforcing cords 42 closer to the long reinforcing cord 41 are longer than the reinforcing cords 43 on the more outer side in the cord-juxtaposing direction in the reinforcing cord layer 40.
It should be noted that other reinforcing cord layers 30, 50, 60 of the patch rubber 20 each have a structure similar to that of the reinforcing cord layer 40 in this regard.

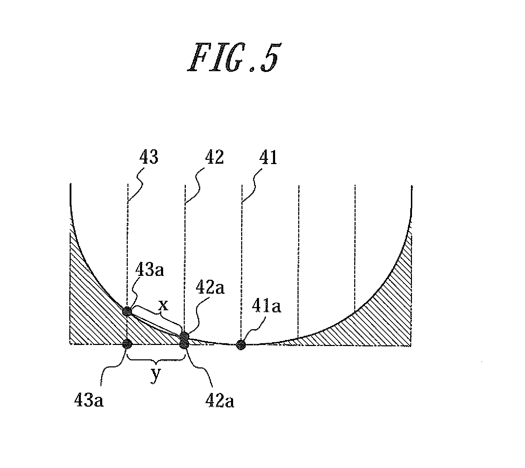

FIG. 5 shows end positions of the reinforcing cords of the reinforcing cord layer 40 of FIG. 3 in an enlarged manner. As shown in FIG. 5, distance x between a cord end position 42a of the reinforcing cord 42 next to the long reinforcing cord 41 and a cord end position 43a of the reinforcing cord 43 on the outer side in the cord-juxtaposing of the reinforcing cord 42, of the reinforcing cord layer 40 shown in FIG. 3, is larger than distance y between imaginary cord end positions 42a', 43 a' of a conventional patch rubber (shown by phantom lines in FIG. 5) in which all cord end positions 41 a, 42a', 43a' of the reinforcing cords on each end side are aligned on a straight line in the cord-juxtaposing direction in each reinforcing cord layer.

Accordingly, it is possible to prevent respective end faces, relatively weakly adhered to rubber, of the reinforcing cords from being positioned at relatively short interval therebetween in the layer-juxtaposing direction in each reinforcing cord layer in the patch rubber 20. As a result, cracks generated between the end faces of the reinforcing cords and rubber surrounding the end faces are prevented from spreading across the end faces of the reinforcing cords adjacent to each other, thereby successfully enhancing durability of the radial tire repaired by using the patch rubber.

Further, the patch rubber 20 can eliminate portions remote from a damaged portion and thus relatively irrelevant to an effect of reinforcing the damaged portion (the hatched corner portions in FIG. 5) in each reinforcing cord layer of the conventional patch rubber, in which patch rubber all of cord end positions of the reinforcing cords on each end side are aligned on a straight line in the cord-juxtaposing direction in each reinforcing cord layer. Accordingly, it is possible to reduce amount of rubber and time necessitated for repair, while ensuring a satisfactory reinforcing effect on a damaged portion, in the patch rubber 20.

### (Method for repairing a radial tire)

One example of a method for repairing a radial tire according to the present invention is characterized in that a damaged portion of a radial tire is repaired by using the patch rubber 20 having the reinforcing cord layers structured as described above.

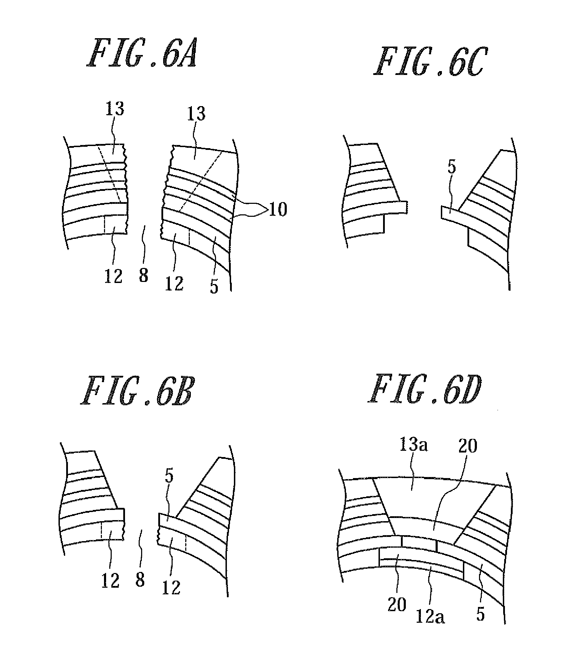

In the one example of the method for repairing a radial tire of the present invention, a damaged portion generated in the tread portion 3 is repaired. FIG. 6A shows a state in which the tread portion 3 of the radial tire 1 has been damaged by penetration and the radial carcass ply 5 and the belt ply 10 are fractured.
Reference number 8 indicates a portion where the radial carcass ply 5 and the belt ply 10 are fractured (i.e. a damaged portion).

According to the one example of the method for repairing a radial tire of the present invention mentioned above, tread rubber 13 and in particular the belt ply 10 in the vicinity of the damaged portion 8 (indicated by broken lines in FIG. 6A) are first removed from the outer surface of the tire until the outermost radial carcass ply 5 on the tire outer surface side is exposed, as shown in FIG. 6B. The tread rubber 13 and in particular the belt ply 10 in the vicinity of the damaged portion can be removed by using, e.g. a regroover.
The vicinities of the belt ply 10 thus exposed may be subjected to finishing operation by buffing or the like to increase an adhesion (press-contact) area between the belt ply 10 and the patch rubber 20 for repairing a radial tire.

Next, inner liner rubber 12 in the vicinity of the damaged portion 8 (indicated by broken lines in FIG. 6B) are removed from the tire inner surface side until the innermost radial carcass ply 5 on the tire inner surface side is exposed, as shown in FIG. 6C. The inner liner rubber 12 in the vicinity of the damaged portion can be removed in the same manner as in removal of the tread rubber 13.
The surfaces of the radial carcass ply 5 thus exposed may be subjected to finishing operation by buffing or the like to increase an adhesion (press-contact) area between the radial carcass ply 5 and the patch rubber 20 for repairing a radial tire.

The patch rubber 20 described above is then attached on the damaged portion 8 from the respective (i.e. the outer and inner) sides of the tire. Specifically, one patch rubber 20 integrated with a new piece 12a of inner liner rubber in advance is attached on the damaged portion 8 from the inner surface side of the radial tire by, e.g. using an adhesive, and another patch rubber 20 integrated with a new piece 13a of tread rubber in advance is attached on the damaged portion 8 from the outer surface side of the radial tire by, e.g. using an adhesive.

The new piece 12a of inner liner rubber and the new piece 13a of tread rubber are preferably made of the same materials as the materials of the inner liner rubber 12 and the tread rubber 13 to be repaired, respectively, because then adhesion properties between the new piece 12a of inner liner rubber and the inner liner rubber 12 of a pneumatic tire to be repaired when they are combined, as well as adhesion properties between the new piece 13a of tread rubber and the tread rubber 13 of the pneumatic tire when they are combined, improve, whereby durability of the radial tire 1 repaired by using the patch rubber 20 enhances.

Further, rubbers 32b, 42b, 52b, 64b of the patch rubber 20 prior to being put on the damaged portion 8 are preferably unvulcanized rubber. That is, it is preferable to attach the patch rubber 20 made of unvulcanized rubber on the damaged portion 8 and then subject the damaged portion 8 with the patch rubber 20 thereon to partial vulcanization. The patch rubber 20 made of unvulcanized rubber can sufficiently firmly adhere to a surface of the damaged portion 8, thereby allowing few bubbles to remain between the patch rubber and the vicinities of the damaged portion 8. Further, the patch rubber 20, made of unvulcanized rubber, can avoid excessive vulcanization when the new piece 12a of inner liner rubber and the new piece 13a of tread rubber are subjected to vulcanization.

According to the aforementioned method for repairing a radial tire, i) the patch rubber 20 is oriented such that the reinforcing cord layer 30 thereof on the one side in the layer-lamination direction, made of the reinforcing cords 32 having high tensile modulus of elasticity, directly faces the damaged portion; ii) and the patch rubber 20 thus oriented is attached to the damaged portion such that the reinforcing cords 32 of the reinforcing cord layer 30 adjacent to the radial carcass ply 5 are in parallel to the extending-direction of the carcass ply cords 6 of the fractured radial carcass pl 5. As a result, the reinforcing cords 32 of the reinforcing cord layer 30 can exhibit the maximum support force in the carcass ply cord-extending direction when a force is exerted on the repaired portion of the radial tire, thereby enhancing the reinforcing effect of the patch rubber 20 and well suppressing shear deformation of the rubber constituting the reinforcing cord layer.
In this connection, it is acceptable that the patch rubber 20 is oriented such that the reinforcing cord layer 60 thereof on the other side in the layer-lamination direction directly faces the damaged portion; and the patch rubber 20 thus oriented is attached to the damaged portion such that the reinforcing cords 64 of the reinforcing cord layer 60 adjacent to the radial carcass ply 5 are in parallel to the extending-direction of the carcass ply cords 6 of the fractured radial carcass pl 5.

By repairing the radial tire 1 by using the patch rubber 20 structured as described above, resistance force, exhibited when the reinforcing cord layer 30 using the reinforcing cords 32 having high tensile modulus of elasticity is elongated, increases and elongation width, observed when the reinforcing cord layer 50 using the reinforcing cords 52 (not shown in FIG. 7A) having low tensile modulus of elasticity is elongated, also increases when a force is exerted on the damaged portion 8 of the radial tire thus repaired, thereby enhancing durability of the repaired radial tire. That is, it is possible to obtain a good reinforcing effect on the damaged portion to enhance durability of the repaired radial tire.

According to the one example of the method for repairing a radial tire of the present invention described above, the patch rubber 20 is attached to the damaged portion 8 as shown in FIG. 7A such that the cord-extending direction of the reinforcing cords of at least one reinforcing cord layer thereof (the reinforcing cord layer 30 is representatively shown in FIG. 7A) is in parallel to the cord-extending direction of the carcass ply cords 6 of the radial carcass ply and the cord-extending direction of the reinforcing cords of the rest of the reinforcing cord layer thereof (the reinforcing cord layer 40 is representatively shown in FIG. 7A) is in parallel to the tire circumferential direction. The present invention, however, is not restricted to this example. More specifically, according to another preferable example of the method for repairing a radial tire of the present invention, the reinforcing cords of at least one of the reinforcing cord layers constituting the patch rubber 20 to be put on the damaged portion 8 for repair intersect the cord-extending direction of the carcass ply cords 6 of the radial carcass ply at intersection angle θ1 (0° < θ1 ≤ 30°) and the reinforcing cords of the rest of the reinforcing cord layers intersect the circumferential direction at intersection angle θ2 (0° < θ2 ≤ 30°). When θ1 exceeds 30°, a force exerted in the extending direction of the carcass ply cords is less supported by the reinforcing cords of the at least one reinforcing cord layer than when 0° < θ1 ≤ 30°. When θ2 exceeds 30°, a force exerted in the tire circumferential direction is less supported by the reinforcing cords of the rest of the reinforcing cord layers than when 0° < θ2 ≤ 30°. That is, when θ1 > 30° and/or θ2 > 30°, the reinforcing effect caused by attaching the patch rubber 20 on the damaged portion weakens, thereby facilitating occurrence of troubles in the radial tire repaired by the patch rubber 20. Incidentally, the cord-extending directions of the reinforcing cords of the reinforcing cord layers of the patch rubber may alternately intersect between the reinforcing cord layers adjacent in the layer-lamination direction.

A "damaged portion 8" represents a gap portion generated as a result of fracture of the carcass ply cord and carcass rubber of the radial carcass ply 5. Specifically, a damaged portion 8 is defined, in a perspective plan view of the radial carcass ply 5 viewed from the tire surface shown in FIG. 7A, as a region demarcated by: the two outermost carcass ply cords 6a, 6a in the cord-juxtaposing direction, of the carcass ply cords 6a of the fractured radial carcass ply 5; and two lines in the tire circumferential direction passing through two points (7a, 7b in FIG. 7A), said two points being the two outermost cord ends on respective two sides in the cord-extending direction of the carcass ply cords of the radial carcass ply, among cord ends 7 of the fractured carcass ply cords. The patch rubber 20 is to be attached to the damaged portion 8 such that the center position of the patch rubber 20 overlaps the center position of the damaged portion 8.

A working area of the patch rubber 20 is defined as a region where the reinforcing region 35 of the reinforcing cord layer 30 on the one end side in the layer-lamination direction as the reinforcing cord layer closest to the damage portion overlaps the reinforcing region 45 of the reinforcing cord layer 40 adjacent to the reinforcing cord layer 30 on the other end side in the layer-lamination direction. Dimensions in the carcass ply cord-extending direction and the tire circumferential direction of the working area may be set by multiplying dimensions in the carcass ply cord-extending direction and the tire circumferential direction of the damaged portion by predetermined times, respectively.

Dimensions of the working area of the patch rubber 20 to be attached to a damaged portion 8 from the inner surface side of the tire are preferably 2 to 4 times as large as dimensions of the damaged portion 8 in the carcass ply cord-extending direction of the radial carcass ply and the tire circumferential direction, respectively. The damaged portion can be sufficiently reinforced and thus repaired in a satisfactory manner by setting dimensions of the working area of the patch rubber 20 attached from the tire inner surface side to be at least two times as large as those of the damaged portion 8. Attaching the patch rubber to portions not necessitating it can be avoided by setting dimensions of the working area of the patch rubber 20 attached from the tire inner surface side to be four times or less as large as those of the damaged portion 8. That is, it is possible to reliably reinforce the damaged portion 8 of a radial tire, while reducing an amount of rubber and operation time required for repairing the radial tire to achieve efficient repair at low cost, by setting dimensions of a working area of the patch rubber 20 on the tire inner surface side to be 2 to 4 times as large as those of the damaged portion 8. Dimensions of the working area of the patch rubber 20 to be attached to a damaged portion 8 from the outer surface side of the tire are preferably 1.1 to 1.4 times as large as dimensions of the damaged portion 8. The damaged portion can be sufficiently reinforced and thus repaired in a satisfactory manner by setting dimensions of a working area of the patch rubber 20 attached from the tire outer surface side to be at least 1.1 times as large as those of the damaged portion 8. Attaching the patch rubber to portions not necessitating it can be avoided by setting dimensions of a working area of the patch rubber 20 on the tire outer surface side to be 1.4 times or less as large as those of the damaged portion 8. That is, it is possible to reliably reinforce the damaged portion 8 of a radial tire, while reducing an amount of rubber and operation time required for repairing the radial tire to achieve efficient repair at low cost, by setting dimensions of a working area of the patch rubber 20 attached from the tire outer surface side to be 1.1to 1.4 times as large as those of the damaged portion 8.

In the one example of the method for repairing a radial tire damaged by penetration at the tread portion 3 of the present invention described above, the patch rubber may be attached from only one of the tire outer surface side and the tire inner surface side. When the patch rubber is put on a damaged portion for mending from only one of the outer surfaces and the inner surface of the tire, rubber on the opposite side of the patch rubber with respect to the radial carcass ply 5 (the inner liner rubber 12a in a case where the repair is done from the tire outer surface side, while the tread rubber 13a in a case where the repair is done from the tire inner surface side) is to be charged at the damaged portion prior to attaching the patch rubber 20 thereto, followed by the attachment of the patch rubber 20 as described above.

Further, the method for repairing a radial tire of the present invention is also applicable to a case where a damage at the tread portion 3 has not reached the radial carcass ply 5 and exists only in the belt ply 10. In this case, the damage can be repaired by removing the tread rubber 13 and in particular the broken belt ply 10 in the vicinities of the damaged portion 8 from the tire outer surface side and then attaching the patch rubber 20 as described above from the tire outer surface side.

Yet further, in yet another example of the method for repairing a radial tire of the present invention, a damage generated in the sidewall portion of a radial tire can be repaired by the repairing processes similar to those in the case of repairing a damage generated in the tread portion of the tire.
A portion where the radial carcass ply 5 has been fractured (i.e. a damaged portion) is indicated by reference number 8' in FIGS. 8A and 8B, in this regard.

According to the another example of the method for repairing a radial tire of the present invention, sidewall rubber 11 in the vicinity of the damaged portion 8' (indicated by broken lines in FIG. 8A) is first removed from the outer surface of the tire until the outermost radial carcass ply 5 on the tire outer surface side is exposed, as shown in FIG. 8B. Next, inner liner rubber 12 in the vicinity of the damaged portion 8' (indicated by broken lines in FIG. 8B) are removed from the tire inner surface side until the innermost radial carcass ply 5 on the tire inner surface side is exposed, as shown in FIG. 8C.

The patch rubber 20 described above is then attached to the damaged portion 8' from the respective (i.e. the outer and inner) sides of the tire. Specifically, one patch rubber 20 integrated with a new piece 12a of inner liner rubber in advance is attached on the damaged portion 8 from the inner surface side of the radial tire by, e.g. using an adhesive, and another patch rubber 20 integrated with a new piece 11a of side rubber in advance is attached on the damaged portion 8' from the outer surface side of the radial tire by, e.g. using an adhesive.
The new piece 12a of inner liner rubber and the new piece 11a of sidewall rubber are preferably made of the same materials as the materials of the inner liner rubber 12 and the sidewall rubber 11 to be repaired, respectively.

Further, rubbers 32b, 42b, 52b, 64b of the patch rubber 20 prior to being put on the damaged portion 8' are preferably unvulcanized rubber. That is, it is preferable to attach the patch rubber 20 made of unvulcanized rubber on the damaged portion 8' and then subject the damaged portion 8' with the patch rubber 20 thereon to partial vulcanization. The patch rubber 20 made of unvulcanized rubber can sufficiently firmly adhere to a surface of the damaged portion 8', thereby allowing few bubbles to remain between the patch rubber and the vicinities of the damaged portion 8'. Further, the patch rubber 20, made of unvulcanized rubber, can avoid excessive vulcanization when the new piece 12a of inner liner rubber and the new piece 11a of sidewall rubber are subjected to vulcanization.

According to aforementioned another example of the method for repairing a radial tire of the present invention, the patch rubber 20 is attached to the damaged portion 8' as shown in FIG. 9A such that the reinforcing cords of the reinforcing cord layer using reinforcing cords having high tensile modulus of elasticity and laminated on the one side in the layer-lamination direction (only the reinforcing cords 32 of the reinforcing cord layer 30 are representatively shown in FIG. 9A) are in parallel to the cord-extending direction of the carcass ply cords 6' of the fractured radial carcass ply 5 (the direction of the intermediate line C1 of the central two ply cords of the four fractured ply cords 6a' in FIG. 9A). The reinforcing cords 32 of the reinforcing cord layer 30 of the patch rubber 20 can support in place of the ply cords 6a' the tensile stress in the carcass ply cord-extending direction of the radial carcass ply of the radial tire, which stress was supported by the ply cords 6a' until they were fractured, by setting the cord-extending direction of the reinforcing cords of the patch rubber 20 to be in parallel to the cord-extending direction of the ply cords 6a'.

By repairing the radial tire 1 by using the patch rubber 20 structured as described above, resistance force, exhibited when the reinforcing cord layer 30 using the reinforcing cords 32 having high tensile modulus of elasticity is elongated, increases and elongation width, observed when the reinforcing cord layer 50 using the reinforcing cords 52 (not shown in FIG. 9A) having low tensile modulus of elasticity is elongated, also increases when a force is exerted on the damaged portion 8' of the radial tire thus repaired, thereby successfully enhancing durability of the repaired radial tire. That is, it is possible to obtain a good reinforcing effect on the damaged portion to enhance durability of the repaired radial tire.

According to the another example of the method for repairing a radial tire of the present invention described above, the patch rubber 20 is attached to the damaged portion 8' such that the reinforcing cords, of the reinforcing cord layer 30 using reinforcing cords 32 having high tensile modulus of elasticity and laminated on the one side in the layer-lamination direction, are in parallel to the direction of the intermediate line C1. The present invention, however, is not restricted to this example. More specifically, according to yet another preferable example of the method for repairing a radial tire of the present invention, the cord-extending direction of the carcass ply cords 6' of the radial carcass ply intersects the reinforcing cords of the reinforcing cord layer 30 attached to the damaged portion of the sidewall portion 2, of the patch rubber 30, at intersection angle θ3 (0° < θ1 ≤ 30°) in the sidewall portion 2 as shown in FIG. 9B. When θ3 exceeds 30°, a force exerted in the extending direction of the carcass ply cords is less supported by the reinforcing cords of the reinforcing cord layer than when 0° < θ1 ≤ 30°, thereby weakening the reinforcing effect caused by attaching the patch rubber 20 on the damaged portion and facilitating occurrence of troubles in the radial tire repaired by the patch rubber 20. Incidentally, the cord-extending directions of the reinforcing cords of the reinforcing cord layers of the patch rubber may alternately intersect between the reinforcing cord layers adjacent in the layer-lamination direction in this example, too.

It is preferable in the aforementioned examples of the method for repairing a radial tire of the present invention to set dimension of a working area of the patch rubber 20 to be put on the damaged portion 8' to be 2 to 4 times as large as the damaged portion in a case where the patch rubber is to be attached form the tire inner surface side and 1.1 to 1.4 times as large as the damaged portion in a case where the patch rubber is to be attached form the tire outer surface side.

A damaged portion 8' represents a gap portion generated as a result of fracture of the carcass ply cord and carcass ply rubber of the radial carcass ply 5, as shown in FIG. 9A. Specifically, a damaged portion 8' is defined, in a perspective plan view of the radial carcass ply 5 viewed from the tire surface shown in FIG. 9A, as a region demarcated by: the two outermost carcass ply cords 6', 6' in the cord-juxtaposing direction, of the carcass ply cords 6' of the fractured radial carcass ply 5; and two lines in the tire circumferential direction passing through two points (7a', 7b' in FIG. 9A), said two points being the two outermost cord ends on respective two sides in the cord-extending direction of the carcass ply cords of the radial carcass ply, among cord ends 7 of the fractured carcass ply cords. Dimensions in the carcass ply cord-extending direction and the tire circumferential direction of a working area of the patch rubber 20 may be set by multiplying dimensions in the carcass ply cord-extending direction and the tire circumferential direction of the damaged portion 8' by predetermined times, respectively. The patch rubber 20 is to be attached to the damaged portion 8' such that the center position of the patch rubber 20 overlaps the center position of the damaged portion 8'.

The damaged portion can be sufficiently reinforced and thus repaired in a satisfactory manner by setting dimensions of the working area of the patch rubber 20 attached from the tire inner surface side to be at least two times as large as those of the damaged portion 8'; and attaching the patch rubber to portions not necessitating it can be avoided by setting dimensions of the working area of the patch rubber 20 attached from the tire inner surface side to be four times or less as large as those of the damaged portion 8', as described above. Further, the damaged portion can be sufficiently reinforced and thus repaired in a satisfactory manner by setting dimensions of the working area of the patch rubber 20 attached from the tire outer surface side to be at least 1.1 times as large as those of the damaged portion 8'; and attaching the patch rubber to portions not necessitating it can be avoided by setting dimensions of the working area of the patch rubber 20 attached from the tire outer surface side to be 1.4 times or less as large as those of the damaged portion 8', as described above. That is, it is possible to reliably reinforce the damaged portion 8' of a radial tire, while reducing an amount of rubber and operation time required for repairing the radial tire to achieve efficient repair at low cost, by setting dimensions of a working area of the patch rubber 20 attached from the tire inner/outer surface side as described above.

In yet another example of the method for repairing a radial tire of the present invention described above, the patch rubber may be attached from only one of the tire outer surface side and the tire inner surface side. When the patch rubber is put on a damaged portion for mending from only one of the outer surfaces and the inner surface of the radial tire 1, rubber on the opposite side of the patch rubber with respect to the radial carcass ply 5 (the inner liner rubber 12a in a case where the repair is done from the tire outer surface side, while the sidewall rubber 11a in a case where the repair is done from the tire inner surface side) is to be charged at the damaged portion prior to attaching the patch rubber 20 thereto, followed by the attachment of the patch rubber 20 as described above.

According to aforementioned another example of the method for repairing a radial tire of the present invention, the patch rubber 20 is attached to the damaged portion 8' as shown in FIG. 9A such that at least one of the respective reinforcing cords 32, 42, 52, 64 of the reinforcing cord layers 30, 40, 50, 60 are in parallel to the cord-extending direction of the carcass ply cords 6' of the fractured radial carcass ply 5. The reinforcing cords 32, 42, 52, 64 of the reinforcing cord layers 30, 40, 50, 60 of the patch rubber 20 can support in place of the ply cords 6a' the tensile stress in the carcass ply cord-extending direction of the radial carcass ply of the radial tire, which stress was supported by the ply cords 6a' until they were fractured, by setting the cord-extending direction of the reinforcing cords of the patch rubber 20 to be in parallel to the cord-extending direction of the ply cords 6a'.

In the method for repairing a radial tire of the present invention, the patch rubber may be attached from only one of the tire outer surface side and the tire inner surface side as described above. When the patch rubber is put on a damaged portion for mending from only one of the outer surfaces and the inner surface of the tire, rubber on the opposite side of the patch rubber with respect to the radial carcass ply 5 (the inner liner rubber 12a in a case where the repair is done from the tire outer surface side, while the tread rubber 13a/the sidewall rubber 11a in a case where the repair is done from the tire inner surface side) is to be charged at the damaged portion prior to attaching the patch rubber 20 thereto, followed by the attachment of the patch rubber 20 as described above.

The method for repairing a radial tire of the present invention is applicable to any radial tire. The method for repairing a radial tire of the present invention is especially effective when it is applied to a super large-size radial tire such as a tire for a construction vehicle, which is not only expensive but susceptible to severe damages at a sidewall portion and/or a tread portion thereof.

A radial tire of which sidewall portion 2 and tread portion 3 have been repaired by the aforementioned method for repairing a radial tire is shown in FIG. 1A. A repaired radial tire which exhibits good durability and can be used for a long period after repair is obtained by the aforementioned method for repairing a radial tire of the present invention.

### Examples

The present invention will be described further in detail by Examples hereinafter. The present invention is not restricted to these Examples by any means.

### (Example 1)

An off-the-road radial tire (ORR 46/90R57) as a test tire was assembled with an application rim prescribed in the JATMA standards and run at the speed of 8 km/hour for 1000 hours under the conditions of internal pressure: 700 kPa and load: 63t. Then, a damage (length in the tire circumferential direction b = 25 mm x length in the carcass ply cord-extending direction of radial carcass ply d = 25 mm) was made in a tread portion of the tire, such that carcass ply cords of a radial carcass ply and belt cords of a belt ply were fractured. A patch rubber having characteristics shown in Table 1 and reinforcing regions decreasing on the other end side in the layer-lamination direction was prepared and attached on the damaged portion from the tire inner surface side for mending.
Durability of the test tire thus repaired was evaluated by the following method. The evaluation results, together with corresponding amount of rubber required for preparation of the patch rubber and time required for repair, are shown in Table 1.

### (Evaluation of durability of the repaired radial tire)

The repaired test tire was assembled with an application rim prescribed in the JATMA standards, run at the speed of 8 km/hour for 3000 hours under the conditions of internal pressure: 700 kPa and load: 63t and the running time prior to the tire experiencing troubles was measured. The longer running time indicates the higher durability of the patch rubber.

### (Comparative Example 1)

A patch rubber of Comparative Example 1 was prepared in the same manner as in Example 1, except that the positions of respective cord ends of reinforcing cords were aligned on straight lines in the cord-juxtaposing direction in each reinforcing cord layer as shown in FIG. 11 in the former. An off-the-road radial tire as a test tire was repaired by using the patch rubber thus prepared and durability of the repaired tire was evaluated in the same manner as in Example 1.

### (Example 2, Comparative Examples 1 to 6)

Off-the-road radial tires as test tires of Example 2 and Comparative Examples 1 to 6 were repaired in the same manner as in Example 1, except that patch rubbers having characteristics shown in Table 1 were used, respectively, in the former. Durability of each of the respective repaired tires was evaluated in the same manner as in Example 1.

**[Table 1]**

| | Patch rubber | | Characteristics of repairing method | | | | | Running performance | | |
|---|---|---|---|---|---|---|---|---|---|---|
| | Configuration | Number of layers in laminate | Inclination angle with respect to ply cord θ (°) | Damaged portion | Side on which patch rubber is attached | Ratio of length in ply cord-extending direction of working area with respect to that of damaged portion ( - ) | Ratio of length in tire circumferential direction of working area with respect to that of damaged portion ( - ) | Running time (hour) | Time required for repair (minute) | Amount of rubber required for repair ( k g ) |
| Example 1 | FIG. 10 | 6 | 0 | Tread | Tire inner surface side | 3 | 3 | 2500 | 60 | 15 |
| Example 2 | FIG. 11 | 6 | 0 | Tread | Tire inner surface side | 3 | 3 | 800 | 70 | 17 |
| Comp. Ex. 1 | FIG. 12 | 6 | 0 | Tread | Tire inner surface side | 3 | 3 | 2500 | 65 | 16 |
| Comp. Ex. 2 | FIG. 12 | 6 | 10 | Tread | Tire inner surface side | 3 | 3 | 2300 | 60 | 15 |
| Comp. Ex. 3 | FIG. 12 | 6 | 40 | Tread | Tire inner surface side | 3 | 3 | 800 | 60 | 15 |
| Comp. Ex. 4 | FIG. 12 | 6 | 0 | Tread | Tire inner surface side | 1.5 | 1.5 | 1500 | 40 | 10 |
| Comp. Ex. 5 | FIG. 12 | 6 | 0 | Tread | Tire inner surface side | 5 | 5 | 2500 | 100 | 25 |
| Comp. Ex. 6 | FIG. 12 | 1 | 0 | Tread | Tire inner surface side | 3 | 3 | 1 | 40 | 15 |

### (Reference Example 1)

An off-the-road radial tire (ORR 46/90R57) as a test tire was assembled with an application rim prescribed in the JATMA standards and run at the speed of 12 km/hour for 4000 hours under the conditions of internal pressure: 700 kPa (102 psi) and load: 62t. Then, a damage (length thereof in the tire circumferential direction a on the radially outer side in the ply cord-extending direction = 25 mm, length thereof in the tire circumferential direction **b** on the radially inner side in the ply cord-extending direction = 23 mm, length thereof **c** in the ply cord-extending direction = 100 mm) was made in a sidewall portion of the radial tire, such that four carcass ply cords of a radial carcass ply were fractured. A patch rubber having characteristics shown in Table 2 and an outermost reinforcing cord layer in the layer-lamination direction, using aramid cords, was prepared and attached on the damaged portion from the tire inner surface side such that the outermost reinforcing cord layer faced the damaged portion, for mending. Durability of the radial test tire thus repaired was evaluated by the following method. The evaluation results are shown in Table 2.

### (Evaluation of durability of the repaired radial tire)

The test tire thus repaired was assembled with an application rim prescribed in the JATMA standards, run at the speed of 12 km/hour for 4000 hours under the conditions of internal pressure: 700 kPa and load: 62t and the running time prior to the tire experiencing troubles was measured. The longer running time indicates the higher durability of the patch rubber.

### (Reference Comparative Example 1)

A patch rubber of Reference Comparative Example 1 was prepared in the same manner as in Example 1, except that the reinforcing cords of the reinforcing cord layers were unanimously made of nylon in the former. An off-the-road radial tire as a test tire was repaired by using the patch rubber thus prepared and durability of the repaired tire was evaluated in the same manner as in Example 1.

### (Reference Examples 2 to 8)

Off-the-road radial tires as test tires of Reference Examples 2 to 8 were repaired in the same manner as in Example 1, except that patch rubbers having characteristics shown in Table 2a and 2b were used, respectively, in the test tires of the former. Durability of each of the respective repaired tires was evaluated in the same manner as in Example 1.

**[Table 2a]**

| | Patch rubber | | | | | | | | | | |
|---|---|---|---|---|---|---|---|---|---|---|---|
| | Configuration | Number of layers in laminate | Position of reinforcing cord layer having high tensile modulus of elasticity in laminate ("1" represents the outermost position) | Reinforcing cord layer having high tensile modulus of elasticity | | | | Reinforcing cord layer having low tensile modulus of elasticity | | | |
| | | | | Layer thickness L2 (mm) | Reinforcing cord having high tensile modulus of elasticity | | | Layer thickness L1 (mm) | Reinforcing cord having low tensile modulus of elasticity | | |
| | | | | | Material | Tensile modulus of elasticity ( Gpa) | Inclination angle with respect to ply cords θ (°) | | Material | Tensile modulus of elasticity ( Gpa) | Inclination angle with respect to ply cords θ (°) |
| Reference Example 1 | FIG. 13 | 6 | 1 | 2 | Aramid | 59 | 0 | 1 | Nylon | 5 | 0 |
| Reference Comp. EX. 1 | FIG. 13 | 6 | - | - | - | - | - | 1 | Nylon | 5 | 0 |
| Reference Example 2 | FIG. 13 | 6 | 2,3 | 2 | Aramid | 59 | 0 | 1 | Nylon | 5 | 0 |
| Reference Example 3 | FIG. 13 | 6 | 1 | 3 | Aramid | 59 | 0 | 1 | Nylon | 5 | 0 |
| Reference Example 4 | FIG. 13 | 6 | 1 | 2 | Aramid | 59 | 40 | 1 | Nylon | 5 | 40 |
| Reference Example 5 | FIG. 13 | 6 | 1 | 2 | Aramid | 59 | 0 | 1 | Nylon | 5 | 0 |
| Reference Example 6 | FIG. 13 | 6 | 1 | 2 | Aramid | 59 | 0 | 1 | Nylon | 5 | 0 |
| Reference Example 7 | FIG. 13 | 4 | 1 | 2 | Aramid | 59 | 0 | 1 | Nylon | 5 | 0 |
| Reference Example 8 | FIG. 13 | 6 | 1 | 2 | Aramid | 59 | 0 | 1 | Nylon | 5 | 0 |

**Table 2b**

| | Repairing method | | | | Running performance |
|---|---|---|---|---|---|
| | Damaged portion | Side on which patch rubber is attached | Ratio of length in ply cord-extending direction of working area with respect to that of damaged portion ( - ) | Ratio of length in tire circumferential direction of working area with respect to that of damaged portion ( - ) | Running time (hour) |
| Reference Example 1 | Sidewall | Tire inner surface side | 2 | 3 | 2500 |
| Reference Comp. EX. 1 | Sidewall | Tire inner surface side | 2 | 3 | 1000 |
| Reference Example 2 | Sidewall | Tire inner surface side | 2 | 3 | 3000 |
| Reference Example 3 | Sidewall | Tire inner surface side | 2 | 3 | 3000 |
| Reference Example 4 | Sidewall | Tire inner surface side | 2 | 3 | 1000 |
| Reference Example 5 | Sidewall | Tire inner surface side | 1.5 | 1.5 | 1000 |
| Reference Example 6 | Sidewall | Tire inner surface side | 5 | 5 | 2500 |
| Reference Example 7 | Sidewall | Tire outer surface side and tire inner surface side | 2 | 3 | 3500 |
| Reference Example 8 | Tread | Tire inner surface side | 2 | 3 | 2500 |

### [INDUSTRIAL APPLICABILITY]

The patch rubber for repairing a radial tire of the present invention can significantly enhance durability of a radial tire repaired by using the same. Further, durability of a radial tire repaired by using the patch rubber is significantly improved by the method for repairing a radial tire of the present invention. Yet further, the repaired radial tire according to the present invention is a repaired radial tire which exhibits good durability and can be used for a long period after repair.

### [REFERENCE SIGNS LIST]

- 1: Radial tire
- 2: Sidewall portion
- 3: Tread portion
- 4: Bead portion
- 5: Radial carcass ply
- 6, 6': carcass ply cord
- 6a, 6a': Fractured carcass ply cord
- 7a, 7b, 7a', 7b': End of fractured carcass ply cord
- 8, 8': Damaged portion
- 10: Belt
- 11: Sidewall rubber
- 11a: Sidewall rubber
- 12: Inner liner rubber
- 12a: Inner liner rubber
- 13: Tread rubber
- 13a: Tread rubber
- 20: Patch rubber
- 30, 40, 50, 60: Reinforcing cord layer
- 32, 42, 52, 64: Reinforcing cord
- 32a, 42a, 52a, 64a: End of reinforcing cord layer
- 41a: End of long reinforcing cord
- 42a: End of reinforcing cord
- 43a: End or reinforcing cord
- 35, 45, 55, 65: Reinforcing region
- 49: Rubber

## Claims

1. A patch rubber for repairing a radial tire, the patch rubber being constituted of reinforcing cord layers each formed by coating plural reinforcing cords aligned in parallel to each other with rubber, **characterized in that:**
the reinforcing cord layers constitute a laminate in which they are laminated from one side to the other side; and
provided that: i) a region defined by a contour curve connecting adjacent cord ends of the plural reinforcing cords at one end side thereof, another contour curve connecting adjacent cord ends of the plural reinforcing cords at the other end side thereof, and the outermost reinforcing cords in a cord-juxtaposing direction of the plural reinforcing cords represents a reinforcing region in each reinforcing cord layer; ii) one reinforcing cord layer has one reinforcing region; and iii) another reinforcing cord layer, which includes the reinforcing cords having the same cord-extending direction as the reinforcing cords of the one reinforcing cord layer and is laminated on the other side in the layer-lamination direction of the one reinforcing cord layer, has another reinforcing region, the another reinforcing region resides within the one reinforcing region.

2. The patch rubber for repairing a radial tire of claim 1, further **characterized in that:**
the cord-extending direction of the reinforcing cords of at least one of the reinforcing cord layers is orthogonal to the cord-extending direction of the reinforcing cords of the rest of the reinforcing cord layers;
width in the cord-juxtaposing direction of the at least one of the reinforcing cord layers is narrower than length in the cord-extending direction of the outermost reinforcing cords in the cord-juxtaposing direction of the rest of the reinforcing cord layers; and
width in the cord-juxtaposing direction of the rest of the reinforcing cord layers is narrower than length in the cord-extending direction of the outermost reinforcing cords in the cord-juxtaposing direction of the at least one of the reinforcing cord layers.

3. The patch rubber for repairing a radial tire of claim 1 or 2, further **characterized in that** tensile modulus of elasticity of the reinforcing cords of the at least one of the reinforcing cord layers is higher than tensile modulus of elasticity of the reinforcing cords of the rest of the reinforcing cord layers.

4. The patch rubber for repairing a radial tire of any of claims 1 to 3, **characterized in that** the at least one of the reinforcing cord layers is disposed on the outermost side in the layer-lamination direction in the laminate.

5. The patch rubber for repairing a radial tire of any of claims 1 to 4, **characterized in that** the reinforcing cords of the at least one of the reinforcing cord layers are aramid cords or glass fiber cords.

6. The patch rubber for repairing a radial tire of any of claims 1 to 5, further **characterized in that** the at least one of the reinforcing cord layers is thicker than each of the rest of the reinforcing cord layers.

7. The patch rubber for repairing a radial tire of any of claims 1 to 6, further **characterized in that:**
the plural reinforcing cords are constituted of: a long reinforcing cord having the longest length in the cord-extending direction among the reinforcing cords; and at least a pair of reinforcing cord disposed on respective sides in the cord-juxtaposing direction orthogonal to the cord-extending direction, of the long reinforcing cord; and
cord ends of the reinforcing cord disposed the closer to the long reinforcing cord are positioned on the more outer side in the cord-extending direction, in said at least a pair of reinforcing cords disposed on respective sides in the cord-juxtaposing direction of the long reinforcing cord.

8. A method for repairing a radial tire having a tread portion, a pair of sidewall portions extending on the tire radially inner side from respective sides of the tread portion, a pair of bead portions extending on the tire radially inner side from the respective sidewalls, a radial carcass ply including at least one ply formed by plural ply cords coated with ply rubber and extending in a toroidal shape across the bead portions, and a belt ply including at least one ply formed by plural belt cords coated with belt rubber, comprising the steps of:
attaching, when at least one of the ply cords of the radial carcass ply and the belt cords of the belt ply are broken in at least one of the sidewall portions and the tread portion, a patch rubber for radial tire repair on at least one of a damaged portion of the broken ply cords of the radial carcass ply and a damaged portion of the broken belt cords of the belt ply from at least one of the inner side and the outer side of the tire, for reinforcing the damaged portion; and
using the patch rubber for repairing a radial tire of any of claims 1 to 7 and attaching it on the damaged portion of the radial tire in the aforementioned reinforcing step.

9. The method for repairing a radial tire of claim 8, further **characterized in that** the reinforcing step comprising:
attaching, when the ply cords of the radial carcass ply are broken in the sidewall portion, the patch rubber on the damaged portion of the broken ply cords of the radial carcass ply such that the reinforcing cords of all of the reinforcing cord layers constituting the patch rubber are inclined at an angle in the range of 0° to 30° with respect to the cord-extending direction of the ply cords of the radial carcass ply.

10. The method for repairing a radial tire of claim 8, **characterized in that** the reinforcing step comprising:
attaching, when the belt cords of the belt ply are broken in the tread portion, the patch rubber on the damaged portion of the broken belt cords of the belt ply such that the reinforcing cords of at least one of the plural reinforcing cord layers constituting the patch rubber are inclined at an angle in the range of 0° to 30° with respect to the tire circumferential direction and the reinforcing cords of the rest of the plural reinforcing cord layers are inclined at an angle in the range of 0° to 30° with respect to the cord-extending direction of the ply cords of the radial carcass ply.

11. The method for repairing a radial tire of any of claims 8 to 10, further comprising setting dimension of a working area of the patch rubber to be put on a damaged portion of the radial tire from the inner side of the tire, to be 2 to 4 times as large as the damaged portion.

12. The method for repairing a radial tire of any of claims 8 to 11, further comprising setting dimension of a working area of the patch rubber to be put on a damaged portion of the radial tire from the outer side of the tire, to be 1.1 to 1.4 times as large as the damaged portion.

13. The method for repairing a radial tire of any of claims 8 to 12, further **characterized in that** the rubber constituting the patch rubber for repairing a radial tire is unvulcanized rubber and the patch rubber is vulcanized after completion of the aforementioned reinforcing step.

14. A repaired radial tire is **characterized in that** the radial tire has been repaired according to the aforementioned method for repairing a radial tire.
